# EUROPEAN PATENT SPECIFICATION

(11) **EP 4 642 994 B1**
(45) Date of publication and mention of the grant of the patent: **26.08.2026**
(21) Application number: 24701770.0
(22) Date of filing: 19.01.2024
(51) Int. Cl.: E21B 4/00, E21B 4/04, E21B 41/00, E21B 41/04, E21B 43/017, E21B 33/035

(54) **SUBSEA ACTUATOR COUPLING DEVICE**
UNTERWASSERAKTUATORKOPPLUNGSVORRICHTUNG
DISPOSITIF DE COUPLAGE D'ACTIONNEUR SOUS-MARIN

(30) Priority: 24.01.2023 GB 202301025
(43) Date of publication of application: 05.11.2025
(73) Proprietor: Baker Hughes Energy Technology UK Limited, Bristol BS48 1BS (GB)
(72) Inventor: FREE, Nathan, Bristol BS3 2DP (GB); SCOTT, Craig, Aberdeen, Aberdeenshire AB21 7EA (GB); PLEWS, Andrew, Newcastle-Upon-Tyne, Tyne and Wear NE6 3PF (GB); PETERSEN, Kjetil, 4029 Stavanger, Rogaland (NO); HJERTVIKREM, Terje, 4029 Stavanger, Rogaland (NO); WOOD, Kevin, Aberdeen, Aberdeenshire AB21 7EA (GB)
(74) Representative: Novagraaf Group
(86) International application number: PCT/EP2024/025034
(87) International publication number: WO 2024/156471

(56) References cited:
- WO-A1-2022/002835
- WO-A1-2022/120123
- WO-A2-2018/057452
- CN-A- 106 764 009
- US-A1- 2002 011 580
- US-B1- 6 257 549
- US-B1- 9 926 770

## Description

### TECHNICAL FIELD

The present disclosure relates to an actuator coupling device for a subsea system, and a method of actuating a subsea tool.

### BACKGROUND

In subsea gas and oil drilling, completion and production operations, subsea systems comprise a variety of subsea tools that may be operated by rotary electric actuators, such as valves, chokes and other mechanical devices. For example, rotary electric actuators may be used to operate valves of subsea trees to manage fluid flow at wellheads.

Rotary electric actuators generally have a fixed maximum speed and torque output. Maximum actuation torque may also be limited by the torque bucket class at the interface with the subsea tool. However, different devices to be operated by rotary electric actuators will have different speed and torque requirements such that a subsea system may require the use of several different types of rotary electric actuators to operate all of the devices within the same system. Each rotary electric actuator would be connected to a subsea control module and controlled from the surface via a subsea control system.

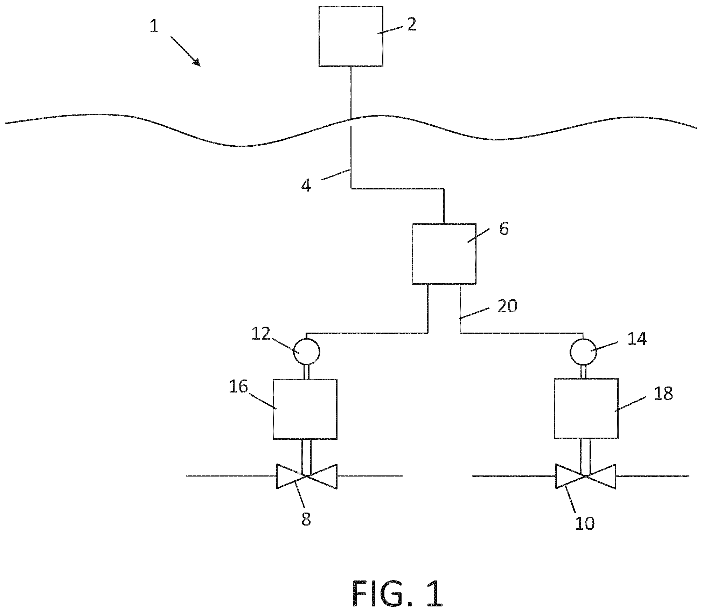

FIG. 1 schematically illustrates a conventional subsea system 1 including a topside control system 2 connected via an umbilical 4 to a subsea control module 6. FIG. 1 shows two subsea valves 8, 10 which may be fluidly connected to a wellhead (not shown), for example as part of a subsea tree system. Each valve 8, 10 is actuated by a respective rotary electric actuator 12, 14 via a standard ROV interface 16, 18. Each actuator 12, 14 is connected to the subsea control module 6 and controlled via one or more power and communication lines 20. The rotary electric actuators 12, 14 provide torque to operate the valves 8, 10 and thus control fluid flow through the valves 8, 10.

The valves 8, 10 may have different actuation requirements which necessitate the use of different types of actuators 12, 14 that may have different maximum speed and torque ratings. For example, valve 8 may be a 2-inch valve or a Small Bore Chemical Isolation Valve whereas valve 10 may be a 42-inch valve or a Production Flowline ball valve that requires a higher torque for actuation. Therefore, actuator 14 has a torque rating that provides a higher torque for actuating the higher torque valve 10 than actuator 12 used for lower torque valve 8. The higher torque valve 10 may also require a higher class torque bucket at the ROV interface than the lower torque valve 8.

Therefore, providing the appropriate torque to operate different types of valves has traditionally required the use of different rotary electric actuators with different torque/speed ratings and different class torque buckets. However, using a range of different types of equipment for a subsea system can increase installation and operation time, costs and complexity.

The present disclosure looks to employ features that address the above concerns.

US 2002/011580 A1 discloses an actuator system for actuating a valve in a subsea environment comprising a valve spindle that is arranged to be coupled to an electric motor. To provide for power to the motor, at least one local electrical storage unit is provided. The system also includes a control unit comprising switching means for controlling the power to the motor.

### SUMMARY

In one aspect, the present disclosure provides an actuator coupling device for a subsea system. The device comprises a plurality of input torque interfaces, each configured to simultaneously receive an input torque from a respective rotary electric actuator; a gearbox comprising a plurality of gearbox inputs, each gearbox input configured to simultaneously receive the input torque from a respective one of the input torque interfaces, wherein the gearbox is configured to combine the input torques to produce a combined output torque at a different magnitude and/or speed than at least one of the input torques; and an output torque interface coupled to an output of the gearbox for providing the combined output torque to a subsea tool.

In an embodiment of the above, the device further comprises a set of bevel gears coupled between at least one of the input torque interfaces and the respective gearbox input.

In a further embodiment, the device further comprises a set of bevel gears coupled between each of the input torque interfaces and each respective gearbox input.

In a further embodiment of any of the above, each set of bevel gears is configured to increase the magnitude or speed of the respective input torque.

In a further embodiment of any of the above, each set of bevel gears is configured to change the direction of the respective input torque by an angle in the range of 70° to 110°, preferably by an angle of about 90°.

In a further embodiment of any of the above, the gearbox comprises a scotch yoke mechanism.

In a further embodiment of any of the above, the device further comprises an additional gearbox coupled between the output of the gearbox and the output torque interface, the additional gearbox configured to increase the magnitude or speed of the combined output torque.

In a further embodiment of any of the above, the plurality of input torque interfaces comprises at least a first input torque interface for receiving a first input torque from a rotary electric actuator and a second input torque interface for receiving a second input torque from a rotary electric actuator, and the plurality of gearbox inputs comprises at least a first input and a second input, the first input coupled to the first input torque interface to receive the first torque and the second input coupled to the second input torque interface to receive the second torque.

In another aspect, the present disclosure provides a subsea actuator for a subsea tool, the subsea actuator comprising the actuator coupling device of the above aspect or any of its embodiments and a plurality of rotary electric actuators, each rotary electric actuator coupled to a respective one of the input torque interfaces to provide the respective input torque.

In another aspect, the present disclosure provides a subsea system comprising the subsea actuator of the above aspect; a subsea control module operatively connected to the subsea actuator, the subsea control module configured to control and power the subsea actuator; and a subsea tool coupled to the output torque interface to receive the combined output torque, the subsea tool configured to be actuated by the combined output torque.

In an embodiment of the above, the subsea tool comprises a ball valve.

In another aspect, the present disclosure provides a method of actuating a subsea tool, the method comprising: coupling each of a plurality of rotary electric actuators to a respective one of a plurality of inputs of a gearbox; coupling a subsea tool to an output of the gearbox; simultaneously applying an input torque from each of the rotary electric actuators to the respective input of the gearbox; combining the input torques from each of the rotary electric actuators at the gearbox to produce a combined output torque at a different magnitude and/or speed than at least one of the input torques; applying the combined output torque to the subsea tool.

In an embodiment of the above, coupling each of a plurality of rotary electric actuators to a respective one of a plurality of inputs of a gearbox comprises coupling at least one of the rotary electric actuators to the respective input of the gearbox via a set of bevel gears.

In a further embodiment of any of the above, coupling each of a plurality of rotary electric actuators to a respective one of a plurality of inputs of a gearbox comprises coupling each of the rotary electric actuators to the respective input of the gearbox via a set of bevel gears.

In a further embodiment of any of the above, set of bevel gears increases the magnitude and/or speed of the respective input torque.

In a further embodiment of any of the above, each set of bevel gears changes the direction of the respective input torque by an angle in the range of 70° to 110°, preferably by an angle of about 90°.

In a further embodiment of any of the above, the method further comprises increasing the magnitude and/or speed of the output torque at an additional gearbox before applying the combined output torque to the subsea tool.

In a further embodiment of any of the above, wherein coupling each of a plurality of rotary electric actuators to a respective one of a plurality of inputs of a gearbox comprises coupling a first rotary electric actuator to a first input of the gearbox and coupling a second rotary electric actuator to a second input of the gearbox, and simultaneously applying an input torque from each of the rotary electric actuators to the respective input of the gearbox comprises simultaneously applying a first torque from the first rotary electric actuator to the first input and a second torque from the second rotary electric actuator to the second input.

### BRIEF DESCRIPTION OF DRAWINGS

One or more non-limiting examples will now be described, by way of example only, and with reference to the accompanying figures in which:
Figure 1 shows a conventional subsea system;
Figure 2 is a schematic diagram of a subsea system according to an embodiment of the present disclosure;
Figure 3 is a schematic diagram of a first embodiment of an actuator coupler according to the present disclosure;
Figure 4 is a schematic diagram of a second embodiment of an actuator coupler according to the present disclosure;
Figure 5 is a schematic diagram of a third embodiment of an actuator coupler according to the present disclosure.

### DETAILED DESCRIPTION

The present disclosure enables a plurality of electrically powered subsea rotary actuators to be coupled to provide an increased combined actuation speed and/or torque.

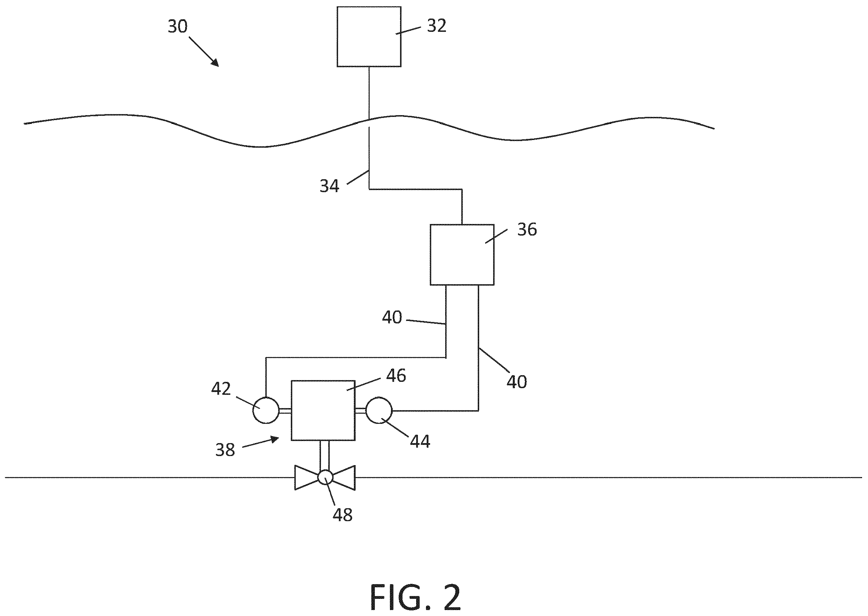

FIG. 2 schematically illustrates a subsea system 30 according to an aspect of the present disclosure. The system 30 includes a topside control system 32 connected via an umbilical 34 to a subsea control module 36. A subsea actuator 38 is connected to the subsea control module 36 via one or more power and communication lines 40. The subsea actuator 38 comprises at least two rotary electric actuators 42, 44 coupled by an actuator coupler 46. In some embodiments, the actuator coupler 46 can couple more than two rotary electric actuators. For example the subsea actuator 38 may comprise at least three or four rotary electric actuators that are coupled by the actuator coupler 46.

The subsea actuator 38 is coupled to a subsea tool 48, which in this embodiment is a valve 48, for example a valve of a subsea tree system (not shown). The valve 48 can be actuated by a mechanical rotational input, i.e., an input torque, provided by the rotary electric actuators 42, 44 via the actuator coupler 46.

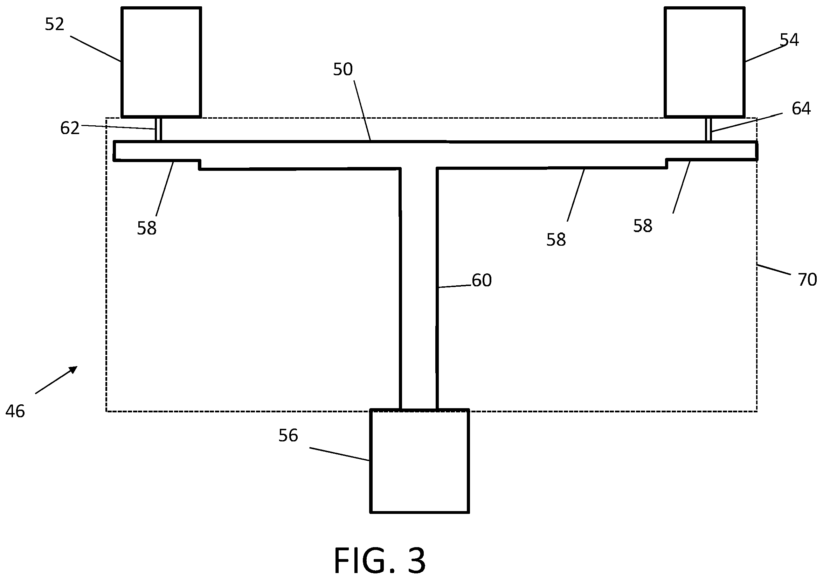

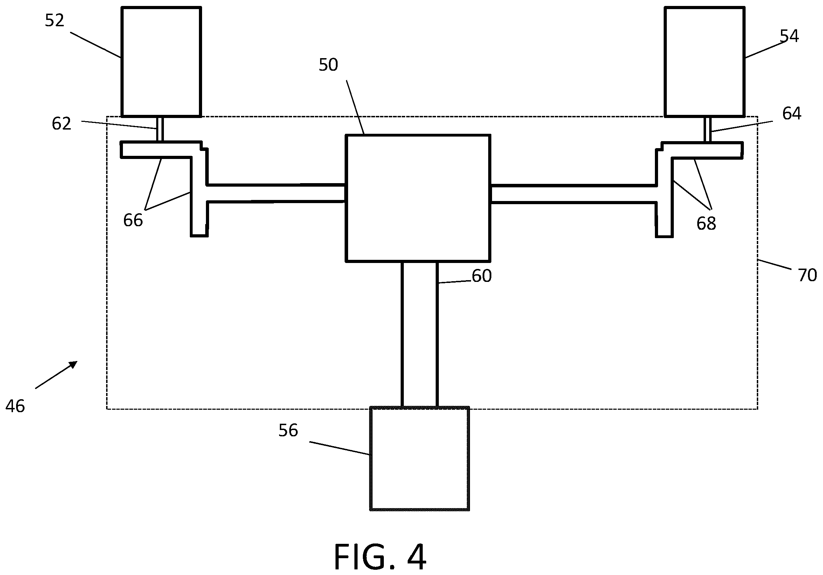

The rotational outputs, i.e., output torques, of the rotary electric actuators 42, 44 are provided as rotational inputs to the actuator coupler 46. Each rotary electric actuator 42, 44 may be controlled by, for example, the subsea control module 36 and/or topside control system 32 to produce a rotational output at a certain torque and speed. The output torque and speed of one rotary electric actuator 42 may be different to the output torque and speed of the other rotary electric actuator 44. With additional reference to FIGS. 3 and 4, discussed further below, the actuator coupler 46 comprises a differential gearbox 50 that receives the rotational outputs of the rotary electric actuators 42, 44 and combines them to produce a combined rotational output from the gearbox 50 at a different torque and/or speed than one or both of the rotational outputs from the actuators 42, 44. As noted above, in some embodiments, the output torques of more than two rotary electric actuators may be combined by the actuator coupler 46 to produce a combined output torque.

Referring to FIG. 3, an embodiment of the actuator coupler 46 comprises first and second input interfaces 52, 54 for connection with the rotary electric actuators 42, 44, and an output interface 56, such as an ROV tool interface, for connection with the subsea tool 48. In embodiments where the outputs of more than two rotary electric actuators are coupled together, the actuator coupler 46 comprises a corresponding number of input interfaces. The input interfaces 52, 54 may each comprise an ROV bucket, for example a class 4, 5 or 6 ROV bucket (according to the ISO 13628 standard). Different combinations of different ROV interface buckets with different torque ratings may be used for the input interfaces 52, 54, depending on the required torque.

As shown schematically in FIG. 3, the differential gearbox 50 comprises a set of gears 58 which connects each input shaft 62, 64 from the ROV buckets 52, 54 to an output shaft 60. The input shafts 62, 64 are each driven by a respective rotary electric actuator 42, 44 and the output shaft 60 drives the subsea tool 48 (not shown in FIG. 3). As will be understood by the skilled person, the gearbox 50 may comprise any type of gearbox that enables at least two inputs to be combined into a single output. For example, the gearbox 50 may comprise spur gears, bevel gears, an epicyclic gear train, an open differential, a locked differential, a limited slip differential, an electronic limited slip differential, or any combination of the foregoing.

The rotational outputs of the rotary electric actuators 42, 44 are combined at the gearbox 50 to provide a greater speed and/or torque. The output power of a rotary electric actuator 42, 44 is the product of the output torque and speed. By combining the output of more than one rotary electric actuator 42, 44, the total output power can be increased to provide increased torque and/or speed compared to a single rotary electric actuator 42, 44. This can be particularly useful for high torque applications, such as high torque ball valves. For example, two rotary electric actuators 42, 44 that each have a relatively low maximum torque may not individually be able to provide sufficient torque for actuating a high torque tool such as a ball valve. By combining the outputs of the two actuators 42, 44, a higher overall torque can be provided that is sufficient for actuating the ball valve.

The gearbox 50 may also allow for a variation of the torque and speed proportions of the actuator outputs and/or of the combined output. Torque and speed are inversely proportional, so the gearbox 50 may increase one by decreasing the other. Therefore, not only can an increased torque be provided by combining the torque from each rotary electric actuator 42, 44, but the torque can be further increased by reducing the speed of the output from each rotary electric actuator 42, 44 and/or the speed of the combined output. Similarly, the speed can be increased by reducing the output torque.

The gearbox 50 may have a fixed gear ratio or a variable gear ratio. A variable gear ratio may be controllable via the subsea control module 36 and/or topside control system 32 to adjust the combined output torque depending on the specific application and the torque requirements of the tool 48 that is to be actuated.

As shown in FIG. 4, bevel gears 66, 68 may additionally be present to change the direction of the torque between the input shafts 62, 64 and the gearbox 50 and may adjust the speed and torque proportions of the output from the rotary electric actuators 42, 44. In the illustrated embodiment, the input shafts 62, 64 extend parallel to each other in the same direction from the ROV buckets 52, 54, and so the bevel gears 66, 68 turn the torque from each input shaft 62, 64 through about 90° in opposite directions to provide opposing inputs to the gearbox 50. In other embodiments, the torque from one or more of the input shafts 62, 64 is turned through angles greater than or less than 90°, for example in the range of 10° to 170°, preferably in the range of 45° to 130°, and more preferably in the range of 70° to 110°.

The output shaft 60 can be fitted with an additional gearbox (not shown) to further increase or decrease the output torque or speed. The actuator coupler 46 comprises an external casing 70 to house the gearbox 50, input shafts 62, 64 and output shaft 60, and the bevel gears 66, 68, if present.

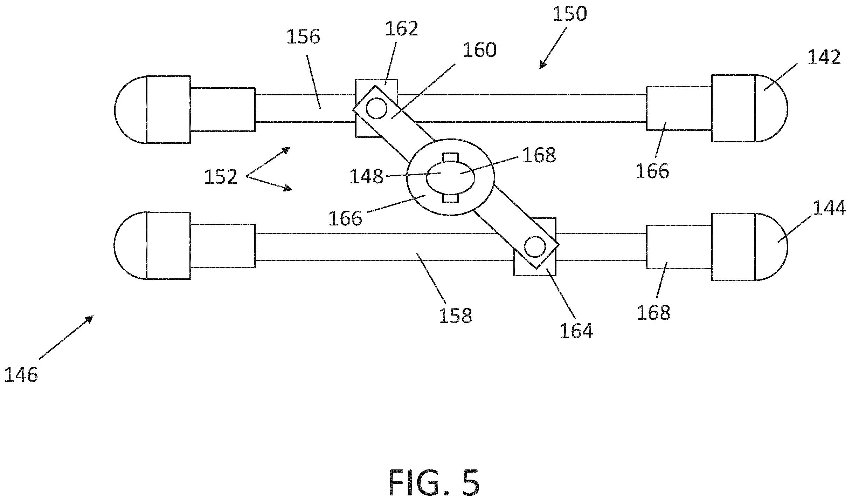

Another embodiment of an actuator coupler 146 that can be used in the subsea system 30 of FIG. 2 is shown in FIG. 5. In this embodiment, the actuator coupler 146 comprises a scotch yoke mechanism 150 to transmit torque from rotary electric actuators 142, 144 to a subsea tool 148, such as a ball valve 148. The scotch yoke mechanism 150 comprises a scotch yoke 160 driven by roller screw mechanisms 152 respectively coupled to the rotary electric actuators 142, 144. Actuation of the rotary electric actuators 142, 144 transfers torque to respective roller screws 156, 158. Rotation of the roller screws 156, 158 is converted into linear motion of corresponding nuts 162, 164 along the screws 156, 158. The linear motion of the nuts 162, 164 is then converted back into rotary motion of the yoke 160 which is coupled between the nuts 162, 164 of each of the roller screw mechanisms 152, 154. The scotch yoke 160 has an output coupling 166 which, in this embodiment, is coupled to a ball valve stem 168 such that rotation of the scotch yoke 160 causes corresponding rotation of the ball valve stem 168 to actuate the ball valve 148.

In this manner, the outputs of the rotary electric actuators 142, 144 are combined to produce a combined output at the output coupling 166 with increased power and increased torque and/or speed. An additional gearbox (not shown) may be coupled between the output coupling 166 and the tool 148 to further increase the output torque or speed. The actuator coupler 146 may comprise ROV bucket interfaces 166, 168 for receiving rotational input from the rotary electric actuators 142, 144.

The present disclosure allows the use of lower power rotary electric actuators for a high torque application, instead of having to use a high power rotary electric actuator. This can provide cost reductions since lower power actuators may be cheaper than high power actuators. Furthermore, combining lower power rotary electric actuators 42, 44 with a differential gearbox 50 in the actuator coupler 46, 146 to produce an increased torque or speed allows the same type of rotary electric actuator 42, 44 to be used to actuate different tools 48, 148 that have different speed and/or torque requirements. This avoids the need to use several different types of actuator for different applications, and the actuators can be standardised across a project or system, which can also reduce cost, complexity and installation time.

Although certain embodiments have been described and depicted, these are by way of example only, and various modifications and alternative embodiments may fall within the scope of the present invention as defined by the appended claims.

## Claims

1. An actuator coupling device (46) for a subsea system (30), the device comprising:
a plurality of input torque interfaces (52, 54), each configured to simultaneously receive an input torque from a respective rotary electric actuator (42, 44);
**characterised by**
a gearbox (50) comprising a plurality of gearbox inputs, each gearbox input configured to simultaneously receive the input torque from a respective one of the input torque interfaces, wherein the gearbox is configured to combine the input torques to produce a combined output torque at a different magnitude and/or speed than at least one of the input torques; and
an output torque interface (56) coupled to an output of the gearbox for providing the combined output torque to a subsea tool (48).

2. The device (46) of claim 1, further comprising a set of bevel gears (66, 68) coupled between at least one of the input torque interfaces (52, 54) and the respective gearbox input.

3. The device (46) of claim 1, further comprising a set of bevel gears (66, 68) coupled between each of the input torque interfaces (52, 54) and each respective gearbox input.

4. The device (46) of claim 2 or 3, wherein each set of bevel gears (66, 68) is configured to increase the magnitude or speed of the respective input torque.

5. The device (46) of claim 2, 3 or 4, wherein each set of bevel gears (66, 68) is configured to change the direction of the respective input torque by an angle in the range of about 70° to about 110°, preferably by an angle of about 90°.

6. The device (46) of any preceding claim, wherein the gearbox (50) comprises a scotch yoke mechanism (150).

7. The device (46) of any preceding claim, further comprising an additional gearbox coupled between the output of the gearbox and the output torque interface (56), the additional gearbox configured to increase the magnitude or speed of the combined output torque.

8. The device (46) of any preceding claim, wherein the plurality of input torque interfaces (52, 54) comprises at least a first input torque interface for receiving a first input torque from a rotary electric actuator (42, 44) and a second input torque interface for receiving a second input torque from a rotary electric actuator (42, 44), and the plurality of gearbox inputs comprises at least a first input and a second input, the first input coupled to the first input torque interface to receive the first torque and the second input coupled to the second input torque interface to receive the second torque.

9. A subsea actuator (38) for a subsea tool (48), the subsea actuator comprising:
the actuator coupling device (46) of any preceding claim; and
a plurality of rotary electric actuators (42, 44), each rotary electric actuator coupled to a respective one of the input torque interfaces (52, 54) to provide the respective input torque.

10. A subsea system (30) comprising:
the subsea actuator (38) of claim 9;
a subsea control module (36) operatively connected to the subsea actuator, the subsea control module configured to control and power the subsea actuator; and
a subsea tool (48) coupled to the output torque interface to receive the combined output torque, the subsea tool configured to be actuated by the combined output torque.

11. The subsea system (30) of claim 10, wherein the subsea tool comprises a ball valve (148).

12. A method of actuating a subsea tool (48), the method comprising:
coupling each of a plurality of rotary electric actuators (42, 44) to a respective one of a plurality of inputs of a gearbox;
coupling a subsea tool to an output of the gearbox;
simultaneously applying an input torque from each of the rotary electric actuators to the respective input of the gearbox;
combining the input torques from each of the rotary electric actuators at the gearbox (50) to produce a combined output torque at a different magnitude and/or speed than at least one of the input torques;
applying the combined output torque to the subsea tool.

13. The method of claim 12, wherein coupling each of a plurality of rotary electric actuators (42, 44) to a respective one of a plurality of inputs of a gearbox comprises coupling at least one of the rotary electric actuators to the respective input of the gearbox via a set of bevel gears (66, 68).

14. The method of claim 12, wherein coupling each of a plurality of rotary electric actuators (42, 44) to a respective one of a plurality of inputs of a gearbox comprises coupling each of the rotary electric actuators to the respective input of the gearbox via a set of bevel gears (66, 68).

15. The method of claim 13 or 14, wherein each set of bevel gears (66, 68) increases the magnitude and/or speed of the respective input torque.

16. The method of claim 13, 14 or 15, wherein each set of bevel gears (66, 68) changes the direction of the respective input torque by an angle in the range of 70° to 110°, preferably by an angle of about 90°.

17. The method of any of claims 12 to 16, further comprising increasing the magnitude and/or speed of the output torque at an additional gearbox before applying the combined output torque to the subsea tool (48).

18. The method of any of claims 12 to 17, wherein coupling each of a plurality of rotary electric actuators (42, 44) to a respective one of a plurality of inputs of a gearbox comprises coupling a first rotary electric actuator to a first input of the gearbox and coupling a second rotary electric actuator to a second input of the gearbox, and
simultaneously applying an input torque from each of the rotary electric actuators to the respective input of the gearbox comprises simultaneously applying a first torque from the first rotary electric actuator to the first input and a second torque from the second rotary electric actuator to the second input.

## Patentansprüche

1. Aktuatorkopplungsvorrichtung (46) für ein Unterwassersystem (30), wobei die Vorrichtung Folgendes umfasst:
eine Vielzahl von Eingangsdrehmomentschnittstellen (52, 54), die jeweils konfiguriert sind, um gleichzeitig ein Eingangsdrehmoment von einem jeweiligen elektrischen Drehaktuator (42, 44) aufzunehmen; **gekennzeichnet durch**
ein Getriebe (50), umfassend eine Vielzahl von Getriebeeingängen, wobei jeder Getriebeeingang konfiguriert ist, um gleichzeitig das Eingangsdrehmoment von einer jeweiligen der Eingangsdrehmomentschnittstellen zu empfangen, wobei das Getriebe konfiguriert ist, um die Eingangsdrehmomente zu kombinieren, um ein kombiniertes Ausgangsdrehmoment mit einer anderen Größe und/oder Drehzahl als mindestens eines der Eingangsdrehmomente zu erzeugen; und
eine Ausgangsdrehmomentschnittstelle (56), gekoppelt an einen Ausgang des Getriebes zum Bereitstellen des kombinierten Ausgangsdrehmoments an ein Unterwasserwerkzeug (48).

2. Vorrichtung (46) nach Anspruch 1, ferner umfassend einen Satz von Kegelrädern (66, 68), die zwischen mindestens einer der Eingangsdrehmomentschnittstellen (52, 54) und dem jeweiligen Getriebeeingang gekoppelt sind.

3. Vorrichtung (46) nach Anspruch 1, ferner umfassend einen Satz von Kegelrädern (66, 68), die zwischen jeder der Eingangsdrehmomentschnittstellen (52, 54) und jedem jeweiligen Getriebeeingang gekoppelt sind.

4. Vorrichtung (46) nach Anspruch 2 oder 3, wobei jeder Satz von Kegelrädern (66, 68) konfiguriert ist, um die Größe oder Geschwindigkeit des jeweiligen Eingangsdrehmoments zu erhöhen.

5. Vorrichtung (46) nach Anspruch 2, 3 oder 4, wobei jeder Satz von Kegelrädern (66, 68) konfiguriert ist, um die Richtung des jeweiligen Eingangsdrehmoments um einen Winkel im Bereich von etwa 70° bis etwa 110°, vorzugsweise um einen Winkel von etwa 90°, zu ändern.

6. Vorrichtung (46) nach einem der vorstehenden Ansprüche, wobei das Getriebe (50) einen Kurbelschleifenmechanismus (150) umfasst.

7. Vorrichtung (46) nach einem der vorstehenden Ansprüche, ferner umfassend ein zusätzliches Getriebe, das zwischen dem Ausgang des Getriebes und der Ausgangsdrehmomentschnittstelle (56) gekoppelt ist, wobei das zusätzliche Getriebe konfiguriert ist, um die Größe oder Drehzahl des kombinierten Ausgangsdrehmoments zu erhöhen.

8. Vorrichtung (46) nach einem der vorstehenden Ansprüche, wobei die Vielzahl von Eingangsdrehmomentschnittstellen (52, 54) mindestens eine erste Eingangsdrehmomentschnittstelle zum Aufnehmen eines ersten Eingangsdrehmoments von einem elektrischen Drehaktuator (42, 44) und eine zweite Eingangsdrehmomentschnittstelle zum Aufnehmen eines zweiten Eingangsdrehmoments von einem elektrischen Drehaktuator (42, 44) umfasst, und die Vielzahl von Getriebeeingängen mindestens einen ersten Eingang und einen zweiten Eingang umfasst, wobei der erste Eingang an die erste Eingangsdrehmomentschnittstelle gekoppelt ist, um das erste Drehmoment aufzunehmen, und der zweite Eingang an die zweite Eingangsdrehmomentschnittstelle gekoppelt ist, um das zweite Drehmoment aufzunehmen.

9. Unterwasseraktuator (38) für ein Unterwasserwerkzeug (48), wobei der Unterwasseraktuator Folgendes umfasst:
die Aktuatorkopplungsvorrichtung (46) nach einem der vorstehenden Ansprüche; und
eine Vielzahl von elektrischen Drehaktuatoren (42, 44), wobei jeder elektrische Drehaktuator an eine jeweilige der Eingangsdrehmomentschnittstellen (52, 54) gekoppelt ist, um das jeweilige Eingangsdrehmoment bereitzustellen.

10. Unterwassersystem (30), umfassend:
den Unterwasseraktuator (38) nach Anspruch 9;
ein Unterwassersteuermodul (36), das funktionell mit dem Unterwasseraktuator verbunden ist, wobei das Unterwassersteuermodul konfiguriert ist, um den Unterwasseraktuator zu steuern und mit Energie zu versorgen; und
ein Unterwasserwerkzeug (48), gekoppelt an die Ausgangsdrehmomentschnittstelle, um das kombinierte Ausgangsdrehmoment aufzunehmen, wobei das Unterwasserwerkzeug konfiguriert ist, um durch das kombinierte Ausgangsdrehmoment betätigt zu werden.

11. Unterwassersystem (30) nach Anspruch 10, wobei das Unterwasserwerkzeug ein Kugelventil (148) umfasst.

12. Verfahren zum Beschichten eines Substrats (48), das Verfahren umfassend:
Koppeln jedes einer Vielzahl von elektrischen Drehakutatoren (42, 44) mit einem jeweiligen einer Vielzahl von Eingängen eines Getriebes;
Koppeln eines Unterwasserwerkzeugs mit einem Ausgang des Getriebes;
gleichzeitiges Anlegen eines Eingangsdrehmoments von jedem der elektrischen Drehaktuatoren an den jeweiligen Eingang des Getriebes;
Kombinieren der Eingangsdrehmomente von jedem der elektrischen Drehaktuatoren an dem Getriebe (50), um ein kombiniertes Ausgangsdrehmoment zu erzeugen, dessen Größe und/oder Drehzahl sich von mindestens einem der Eingangsdrehmomente unterscheidet;
Anlegen des kombinierten Ausgangsdrehmoments an das Unterwasserwerkzeug.

13. Verfahren nach Anspruch 12, wobei das Koppeln jedes einer Vielzahl von elektrischen Drehaktuatoren (42, 44) mit einem jeweiligen Eingang einer Vielzahl von Eingängen eines Getriebes das Koppeln mindestens eines der elektrischen Drehaktuatoren mit dem jeweiligen Eingang des Getriebes über einen Satz Kegelräder (66, 68) umfasst.

14. Verfahren nach Anspruch 12, wobei das Koppeln jedes einer Vielzahl von elektrischen Drehaktuatoren (42, 44) mit einem jeweiligen Eingang einer Vielzahl von Eingängen eines Getriebes das Koppeln jedes der elektrischen Drehaktuatoren mit dem jeweiligen Eingang des Getriebes über einen Satz Kegelräder (66, 68) umfasst.

15. Verfahren nach Anspruch 13 oder 14, wobei jeder Satz von Kegelrädern (66, 68) die Größe und/oder Geschwindigkeit des jeweiligen Eingangsdrehmoments erhöht.

16. Verfahren nach Anspruch 13, 14 oder 15, wobei jeder Satz von Kegelrädern (66, 68) die Richtung des jeweiligen Eingangsdrehmoments um einen Winkel im Bereich von 70° bis 110°, vorzugsweise um einen Winkel von etwa 90°, ändert.

17. Verfahren nach einem der Ansprüche 12 bis 16, ferner umfassend das Erhöhen der Größe und/oder der Geschwindigkeit des Ausgangsdrehmoments an einem zusätzlichen Getriebe, bevor das kombinierte Ausgangsdrehmoment an das Unterwasserwerkzeug (48) angelegt wird.

18. Verfahren nach einem der Ansprüche 12 bis 17, wobei das Koppeln jedes einer Vielzahl von elektrischen Drehaktuatoren (42, 44) mit einem jeweiligen einer Vielzahl von Eingängen eines Getriebes das Koppeln eines ersten elektrischen Drehaktuators mit einem ersten Eingang des Getriebes und das Koppeln eines zweiten elektrischen Drehaktuators mit einem zweiten Eingang des Getriebes umfasst, und
das gleichzeitige Anlegen eines Eingangsdrehmoments von jedem der elektrischen Drehaktuatoren an den jeweiligen Eingang des Getriebes das gleichzeitige Anlegen eines ersten Drehmoments von dem ersten elektrischen Drehaktuator an den ersten Eingang und eines zweiten Drehmoments von dem zweiten elektrischen Drehaktuator an den zweiten Eingang umfasst.

## Revendications

1. Dispositif (46) d'accouplement d'actionneur pour un système sous-marin (30), le dispositif comprenant :
une pluralité d'interfaces de couple d'entrée (52, 54), chacune étant conçue pour recevoir simultanément un couple d'entrée à partir d'un actionneur électrique rotatif (42, 44) respectif ; **caractérisé par**
une boîte de vitesses (50) comprenant une pluralité d'entrées de boîte de vitesses, chaque entrée de boîte de vitesses étant conçue pour recevoir simultanément le couple d'entrée à partir d'une interface respective des interfaces de couple d'entrée, dans lequel la boîte de vitesses est conçue pour combiner les couples d'entrée afin de produire un couple de sortie combiné d'une amplitude et/ou d'une vitesse différente(s) de celle(s) d'au moins l'un des couples d'entrée ; et
une interface de couple de sortie (56) accouplée à une sortie de la boîte de vitesses pour fournir le couple de sortie combiné à un outil sous-marin (48).

2. Dispositif (46) selon la revendication 1, comprenant en outre un jeu d'engrenages coniques (66, 68) accouplé entre au moins l'une des interfaces de couple d'entrée (52, 54) et l'entrée de boîte de vitesses respective.

3. Dispositif (46) selon la revendication 1, comprenant en outre un jeu d'engrenages coniques (66, 68) accouplé entre chacune des interfaces de couple d'entrée (52, 54) et chaque entrée de boîte de vitesses respective.

4. Dispositif (46) selon la revendication 2 ou 3, dans lequel chaque jeu d'engrenages coniques (66, 68) est conçu pour augmenter l'amplitude ou la vitesse du couple d'entrée respectif.

5. Dispositif (46) selon la revendication 2, 3 ou 4, dans lequel chaque jeu d'engrenages coniques (66, 68) est conçu pour modifier la direction du couple d'entrée respectif selon un angle compris dans la plage allant d'environ 70 ° à environ 110 °, de préférence selon un angle d'environ 90 °.

6. Dispositif (46) selon l'une quelconque revendication précédente, dans lequel la boîte de vitesses (50) comprend un mécanisme de type excentrique Scotch (150).

7. Dispositif (46) selon l'une quelconque revendication précédente, comprenant en outre une boîte de vitesses supplémentaire accouplée entre la sortie de la boîte de vitesses et l'interface de couple de sortie (56), la boîte de vitesses supplémentaire étant conçue pour augmenter l'amplitude ou la vitesse du couple de sortie combiné.

8. Dispositif (46) selon l'une quelconque revendication précédente, dans lequel la pluralité d'interfaces de couple d'entrée (52, 54) comprennent au moins une première interface de couple d'entrée destinée à recevoir un premier couple d'entrée à partir d'un actionneur électrique rotatif (42, 44) et une seconde interface de couple d'entrée destinée à recevoir un second couple d'entrée à partir d'un actionneur électrique rotatif (42, 44), et la pluralité d'entrées de boîte de vitesses comprennent au moins une première entrée et une seconde entrée, la première entrée étant accouplée à la première interface de couple d'entrée pour recevoir le premier couple et la seconde entrée étant accouplée à la seconde interface de couple d'entrée pour recevoir le second couple.

9. Actionneur sous-marin (38) pour un outil sous-marin (48), l'actionneur sous-marin comprenant :
le dispositif (46) d'accouplement d'actionneur selon l'une quelconque revendication précédente ; et
une pluralité d'actionneurs électriques rotatifs (42, 44), chaque actionneur électrique rotatif étant accouplé à une interface respective des interfaces de couple d'entrée (52, 54) pour fournir le couple d'entrée respectif.

10. Système sous-marin (30) comprenant :
un actionneur sous-marin (38) selon la revendication 9 ;
un module de commande sous-marin (36) connecté de manière opérationnelle à l'actionneur sous-marin, le module de commande sous-marin étant conçu pour commander et alimenter l'actionneur sous-marin ; et
un outil sous-marin (48) accouplé à l'interface de couple de sortie pour recevoir le couple de sortie combiné, l'outil sous-marin étant conçu pour être actionné par le couple de sortie combiné.

11. Système sous-marin (30) selon la revendication 10, dans lequel l'outil sous-marin comprend une soupape à bille (148).

12. Procédé d'actionnement d'un outil sous-marin (48), le procédé comprenant :
l'accouplement de chacun d'une pluralité d'actionneurs électriques rotatifs (42, 44) à une entrée respective d'une pluralité d'entrées d'une boîte de vitesses ;
l'accouplement d'un outil sous-marin à une sortie de la boîte de vitesses ;
l'application simultanée d'un couple d'entrée à partir de chacun des actionneurs électriques rotatifs à l'entrée respective de la boîte de vitesses ;
la combinaison des couples d'entrée à partir de chacun des actionneurs électriques rotatifs au niveau de la boîte de vitesses (50) pour produire un couple de sortie combiné d'une amplitude et/ou d'une vitesse différente(s) de celle(s) d'au moins l'un des couples d'entrée ;
l'application du couple de sortie combiné à l'outil sous-marin.

13. Procédé selon la revendication 12, dans lequel l'accouplement de chacun d'une pluralité d'actionneurs électriques rotatifs (42, 44) à une entrée respective d'une pluralité d'entrées d'une boîte de vitesses comprend l'accouplement d'au moins l'un des actionneurs électriques rotatifs à l'entrée respective de la boîte de vitesses par l'intermédiaire d'un jeu d'engrenages coniques (66, 68).

14. Procédé selon la revendication 12, dans lequel l'accouplement de chacun d'une pluralité d'actionneurs électriques rotatifs (42, 44) à une entrée respective d'une pluralité d'entrées d'une boîte de vitesses comprend l'accouplement de chacun des actionneurs électriques rotatifs à l'entrée respective de la boîte de vitesses par l'intermédiaire d'un jeu d'engrenages coniques (66, 68).

15. Procédé selon la revendication 13 ou 14, dans lequel chaque jeu d'engrenages coniques (66, 68) augmente l'amplitude et/ou la vitesse du couple d'entrée respectif.

16. Procédé selon la revendication 13, 14 ou 15, dans lequel chaque jeu d'engrenages coniques (66, 68) modifie la direction du couple d'entrée respectif d'un angle dans la plage de 70° à 110°, de préférence d'un angle d'environ 90°.

17. Procédé selon l'une quelconque des revendications 12 à 16, comprenant en outre l'augmentation de l'amplitude et/ou de la vitesse du couple de sortie au niveau d'une boîte de vitesses supplémentaire avant d'appliquer le couple de sortie combiné à l'outil sous-marin (48).

18. Procédé selon l'une quelconque des revendications 12 à 17, dans lequel l'accouplement de chacun d'une pluralité d'actionneurs électriques rotatifs (42, 44) à une entrée respective d'une pluralité d'entrées d'une boîte de vitesses comprend l'accouplement d'un premier actionneur électrique rotatif à une première entrée de la boîte de vitesses et l'accouplement d'un second actionneur électrique rotatif à une seconde entrée de la boîte de vitesses, et
l'application simultanée d'un couple d'entrée à partir de chacun des actionneurs électriques rotatifs à l'entrée respective de la boîte de vitesses comprend l'application simultanée d'un premier couple à partir du premier actionneur électrique rotatif à la première entrée et d'un second couple à partir du second actionneur électrique rotatif à la seconde entrée.
